# EUROPEAN PATENT SPECIFICATION

(11) **EP 1 958 860 B1**
(45) Date of publication and mention of the grant of the patent: **21.09.2011**
(21) Application number: 08250503.3
(22) Date of filing: 12.02.2008
(51) Int. Cl.: B62J 17/02

(54) **Motorcycle with an air duct member**
Motorrad mit einem Luftleitungselement
Motocyclette avec un élément de guidage d'air

(30) Priority: 13.02.2007 JP 2007032562
(43) Date of publication of application: 20.08.2008
(73) Proprietor: Yamaha Hatsudoki Kabushiki Kaisha, Iwata-shi, Shizuoka 438-8501 (JP)
(72) Inventor: Tarumi, Seiji c/o Yamaha Hatsudoki Kabushiki Kaisha, Iwata-shi Shizuoka-ken 438-8501 (JP)
(74) Representative: Lamb, Martin John Carstairs

(56) References cited:
- EP-A- 1 496 241

## Description

### FIELD OF THE INVENTION

The present invention relates to a motorcycle that is provided with an air duct member that inhibits dirty water thrown up by a front wheel from directly hitting a radiator, and guides running wind to the radiator.

### BACKGROUND TO THE INVENTION

JP-A-2006-142911 discloses a scooter that has a cowling that covers the entire vehicle body. A front section of the cowling forms a leg shield that covers the legs of a rider from the front, and that covers a rear upper side of a front wheel.

A recess is formed in the front section of the cowling. The recess prevents the occurrence of interference with a front wheel, a front fork etc. that are turned with a steering handle. In addition, a radiator is provided at a position to the rear of the recess inside the front section of the cowling.

The recess is formed to open to the front and to the bottom of the vehicle body. An upper section of the front wheel at the rear side of the vehicle body faces the inside of the recess from the front.

An air duct member is provided at a rear end section within the recess. The air duct member inhibits dirty water, gravel or the like (hereinafter simply referred to as "dirty water") thrown up by the front wheel that has not been blocked by a fender from directly hitting the radiator, and guides running wind to the radiator.

The air duct member is provided with a plurality of cooling air ducts that are formed to extend in the upward-downward direction, and is positioned so as to be hidden behind the front wheel and the front fork when viewed from the front. More particularly, the dirty water thrown up by the front wheel that has not been blocked by the fender hits a front surface of the cooling air ducts, and flows downward or drips downward rather than being directed toward the radiator.

The plurality of cooling air ducts are formed in a line in the vehicle width direction, and incline with respect to the front-rear direction when viewed in a plan view. More particularly, the air duct member adopts a structure in which running wind passes through the gaps formed between neighboring cooling air ducts.

Among the plurality of cooling air ducts, the plurality of cooling air ducts positioned to the left side of the vehicle body have a main surface (front surface) that is oriented toward the front right side, and are formed to extend diagonally toward the front left side when viewed in the plan view. Furthermore, the plurality of cooling air ducts positioned to the right side of the vehicle body have a main surface (front surface) that is oriented toward the front left side, and are formed to extend diagonally toward the front right side when viewed in the plan view.

In the known motorcycle provided with the above-described air duct member, during running, the running wind passes both sides and above the front wheel from the front side of the vehicle body, and enters the inside of the recess. A large quantity of the running wind flows along walls of the recess, enters the air duct member, and is guided to the radiator.

EP 1 496 241 describes a motorcycle having a wind guide structure, wherein a radiator is provided rearwardly of a front wheel of the motorcycle. The radiator is provided in a wind guide path, and the wind guide path is formed in a body cover that covers a region behind the front wheel, or a first inner fender, and another body cover that covers the bottom part of the body, or a second inner fender. An induction port is formed in the first inner fender (body cover) in a position behind the front wheel and on the lower side of the wind guide path. The induction port allows running wind to be introduced to the radiator, and the radiator is disposed rearwardly of and in the vicinity of the induction port. The induction port is provided with a flap member, which is formed with a plurality of guide vanes for guiding the running wind toward the radiator. These guide vanes are disposed in vertical relation and generally in parallel with each other. Each of the guide vanes has a plate shape, and is disposed along the width direction of the vehicle and inclined toward the radiator so that its rear end is positioned below its front end.

Modern motorcycles are required to have improved engine output and in addition improved radiator cooling performance. However, with the air duct member disclosed in JP-A-2006-142911, there is a limit to how much the flow of running wind guided to the radiator can be increased. As a result, it is not possible to improve cooling performance by guiding a large quantity of running wind to the radiator.

In the air duct member of JP-A-2006-142911, one cause of the fact that it is not possible to increase the flow of running wind guided to the radiator is thought to be that cooling air ducts extend in the upward-downward direction.

Some of the running wind that enters inside the recess flows along a rear wall surface of the recess and diagonally downward from both sides in the vehicle width direction. The running wind flowing downward in this manner is easily able to pass between the neighboring cooling air ducts and flow out downwards (to the outside of the cowling) from the inside of the recess.

More particularly, the air duct member of JP-A-2006-142911 cannot cause the downward flowing running wind to flow to, namely, be guided to, the radiator, and thus cannot increase the quantity of running wind that flows to the radiator. Thus, it is not possible to further improve the cooling performance of the radiator. As a result, when the air duct member of this prior art document is used, in order to improve the cooling performance of the radiator, a relatively large radiator must be used.

Among the components mounted on a motorcycle, the components that are cooled by running wind are, in addition to the radiator, an oil cooler. It has been proposed that the air duct member be used to increase the quantity of running wind guided to the oil cooler, but in known technology a special air duct member has not been used. Therefore, known motorcycles require improved cooling performance of the oil cooler.

The invention has been devised in order to solve the above-described and other problems, and it is an object thereof to provide a motorcycle that inhibits dirty water not blocked by a fender that is thrown up by a front wheel from directly hitting a heat exchanger like a radiator or an oil cooler, and also increases the quantity of running wind guided to the heat exchanger by an air duct member and further improves the cooling performance of the heat exchanger.

### SUMMARY OF THE INVENTION

Various aspects of the present invention are defined in the independent claims. Some preferred features are defined in the dependent claims.

Described herein is a motorcycle comprising:
a cowling defining a recess adapted to partially cover a front wheel;
a heat exchanger disposed to the rear of the recess; and
an air duct member mounted within the recess and comprising a plurality of cooling air ducts arranged between upper to lower regions of the air duct member, and adapted to guide air toward the heat exchanger,
wherein a front surface of each cooling air duct is oriented towards the front lower side of the vehicle, and a rear surface of each cooling air duct is oriented towards a rear upper side of the vehicle, and the cooling air ducts are formed to incline from a side region of the air duct member to a central region of the air duct member.

The cooling air ducts are formed to incline downwardly from the central region of the air duct member to the side region of the air duct member.

The air duct member may comprise a vertical plate having a main surface that extends in the front-rear direction of the vehicle and is adapted to provide support in the vicinity of an outer side of the plurality of cooling air ducts, wherein the cooling air ducts comprise protruding portions that protrude further to the outside in the vehicle width direction than the vertical plate.

The respective positions at which the protruding portions of the cooling air ducts connect to an outer surface of the vertical plate and the inside portions of the cooling air ducts connect to an inner surface of the vertical plate are aligned with each other.

The inside and protruding portions of the cooling air ducts may be disposed in a coplanar manner.

A dimension of the vertical plate in the vehicle body front-rear direction may be greater than or equal to a dimension in the vehicle body front-rear direction of a connection portion of the protruding portion and the vertical plate.

The vertical plate may comprise an extending portion extending rearwardly of a connection portion of the protruding portion and the vertical plate.

The air duct member may comprise an integrated unit at least partially formed from a synthetic resin material.

The plurality of cooling air ducts may extend rearwardly of the vehicle from the side region to the central region of the air duct member.

The plurality of cooling air ducts may be gradually positioned further to the rear of the vehicle body as the cooling air ducts extend from an upper region to a lower region of the air duct member.

A lower edge of one cooling air duct may be positioned at a lower position than an upper edge of an immediately upper adjacent cooling air duct. Said lower and upper edges of adjacent cooling air ducts may have a distance of separation therebetween in the front-rear direction of the vehicle.

An upper edge of one cooling air duct may be located further to the front of the vehicle than the lower edge of an immediately upper adjacent cooling air duct.

The cooling air ducts may be formed to have line symmetry along the central region of the air duct member.

Also described herein is a motorcycle comprising: a cowling, covering a rear upper side of a front wheel, having a recess formed therein that opens toward a front lower side of a vehicle body and faces an upper section of the front wheel at a rear side of the vehicle body; a heat exchanger that is disposed to the rear of the recess; and an air duct member, provided in the recess such that a periphery of the air duct member is surrounded by the cowling, that guides running wind from inside the recess toward the heat exchanger. In this motorcycle, the air duct member is provided with a plurality of cooling air ducts that are lined up in an upward-downward direction, and a front surface of the cooling air ducts is formed to be oriented to the front lower side of the vehicle body, and a rear surface of the cooling air ducts is formed to be oriented toward a rear upper side of the vehicle body. When the cooling air ducts are viewed from the front of the vehicle body, the cooling air ducts are formed to incline with gradually changing height as the cooling air ducts extend from an end section at an outside in the vehicle width direction to a vehicle width direction central portion.

Running wind that flows downward inside the recess along a rear wall surface of the recess can also be guided to the heat exchanger. Thus, as compared to the known air duct member, the quantity of running wind that is guided to the heat exchanger is increased. In addition, dirty water thrown up by the front wheel hits the front surface of the cooling air ducts from the lower front side, and the dirty water that hits the cooling air ducts flows downward along the cooling air ducts that incline diagonally when viewed from the front of the vehicle body. As a result, the dirty water thrown up by the front wheel is reliably inhibited from flying toward the heat exchanger.

As a result, the dirty water thrown up by the front wheel can be inhibited from directly hitting the heat exchanger, and the cooling performance of the heat exchanger can be improved. Thus, with the motorcycle described herein, even if the heat exchanger described in JP-A-2006-142911 is used as the heat exchanger, cooling performance can be improved.

In addition, even if a heat exchanger that is smaller than that described in JP-A-2006-142911 is used, cooling performance comparable to that of the heat exchanger described in this prior art reference can be achieved. As a result, in the case that improved cooling performance is not required, a relatively small heat exchanger can be used, thereby allowing costs to be reduced and the size of the vehicle body to be made smaller.

The cooling air ducts may be formed to incline such that the cooling air ducts are positioned further downward as the cooling air ducts extend from the vehicle width direction central portion of the air duct member to a side.

Thus, a gap is formed between neighboring cooling air ducts, and the gap opens toward both vehicle width direction side sections at the upper section inside the recess. Thus, running wind that flows diagonally downward along the rear wall surface of the recess toward the lower side of the vehicle width direction central portion inside the recess from the vehicle width direction side sections at the upper section inside the recess can easily enter in to the gap between the neighboring cooling air ducts. As a result, the quantity of running wind guided to the heat exchanger can be increased still further.

The air duct member may be further provided with a vertical plate that provides support in the vicinity of a vehicle width direction outer side of the plurality of cooling air ducts. The vertical plate may extend in the upward-downward direction and may have a main surface that extends in the front-rear direction of the vehicle body, and the cooling air ducts may have protruding portions that protrude further to the outside in the vehicle width direction than the vertical plate.

Thus, the running wind that flows to the air duct member from the outside in the vehicle width direction hits the cooling air ducts and the vertical plate, and is caused to flow toward the heat exchanger as a result of being pushed by the running wind that is flowing between the neighboring cooling air ducts.

Therefore, a motorcycle can be provided in which cooling performance of the heat exchanger can be improved still further because the running wind that flows in from the side of the air duct member can also cool the heat exchanger.

The air duct member may have a structure in which the position at which the protruding portions of the cooling air ducts connect to the vertical plate and the position at which inside portions of the cooling air ducts, located further to an inside in the vehicle width direction than the vertical plate, connect to the vertical plate are the same.

The inside portions and the protruding portion of the cooling air ducts may be disposed in a coplanar manner.

If the air duct member is an integrated unit that is made using synthetic resin, the structure of the molding die can be simplified.

A dimension of the vertical plate in the vehicle body front-rear direction may be the same as or more than a dimension in the vehicle body front-rear direction of a connection portion of the protruding portion and the vertical plate.

The vertical plate may have an extending portion that extends further to the rear than the position of a vehicle body front-rear direction rear end of a connection portion of the protruding portion and the vertical plate.

Among the running wind guided to the heat exchanger by the protruding portions of the cooling air ducts, the running wind that has a directional component toward the inside in the vehicle width direction can be guided to the rear of the vehicle body (the heat exchanger side) by the vertical plate.

The air duct member may comprise an integrated unit made using a synthetic resin material. Thus, a motorcycle can be provided that facilitates cost reduction as a result of lower manufacturing costs resulting from the benefits of mass producing the air duct member.

The plurality of cooling air ducts may be formed to incline such that the cooling air ducts are gradually positioned further to the rear of the vehicle body as the cooling air ducts extend from the end section at the outside in the vehicle width direction to the vehicle width direction central portion.

Interference of the air duct member with the front wheel is thus avoided while the air duct member is positioned as far as possible toward the front of the vehicle body. Accordingly, more running wind can be guided toward the heat exchanger.

The plurality of cooling air ducts may be formed to incline such that the cooling air ducts are gradually positioned further to the rear of the vehicle body as the cooling air ducts extend from an upper end to a lower end. In addition, pairs of upward-downward direction neighboring cooling air ducts among the cooling air ducts may be formed such that a lower edge of the cooling air duct positioned to the upper side and an upper edge of the cooling air duct positioned to the lower side overlap with each other when viewed in the front-rear direction of the vehicle body and have a distance of separation between each other in the front-rear direction of the vehicle body.

Thus, in this arrangement the lower edge of the cooling air duct is positioned to the upper side and the upper edge of the cooling air duct positioned to the lower side and overlap with each other when viewed in the front-rear direction. As a result, it is even more certain that dirty water thrown up by the front wheel will hit the front surface of the cooling air ducts.

The upper edge of the cooling air duct positioned to the lower side may be located further to the front of the vehicle body than the lower edge of the cooling air duct positioned to the upper side.

When the plurality of cooling air ducts are viewed from the lower front side, as opposed to when they are viewed from the front, the width of the section where neighboring cooling air ducts overlap is comparatively large. Accordingly, dirty water thrown up by the front wheel can be inhibited even more reliably from flying toward the heat exchanger by the cooling air ducts.

The cooling air ducts may be formed to have line symmetry about an imaginary line that extends in the upward-downward direction along the vehicle width direction central portion of the air duct member, and the cooling air ducts are formed to incline such that the cooling air ducts are positioned further to the lower side as the cooling air ducts extend from the vehicle width direction central portion to the side of the air duct member.

Running wind can therefore be guided toward the heat exchanger from a wide area that extends generally throughout the entire vehicle width direction area inside the recess. As a result, even if a relatively large heat exchanger is provided at the vehicle width direction central portion as the heat exchanger, adequate running wind can be fed to the large sized heat exchanger. Therefore, a motorcycle can be provided that improves the cooling performance of the heat exchanger even more.

### BRIEF DESCRIPTION OF THE DRAWINGS

These and other aspects of the present invention will now be described, by way of example only, with reference to the accompanying drawings, in which:
FIG. 1 is a side view of a motorcycle according to an embodiment of the present invention;
FIG. 2 is a front view of the motorcycle of FIG. 1;
FIG. 3 is a cross sectional view of a recess of a cowling, an air duct member, and a radiator of the motorcycle of FIG. 1;
FIG. 4 is a side view of the air duct member;
FIG. 5 is a rear view of the air duct member;
FIG. 6 is a cross sectional view of the air duct member; and
FIG. 7 is a perspective view of the air duct member and the radiator.

### DETAILED DESCRIPTION OF THE INVENTION

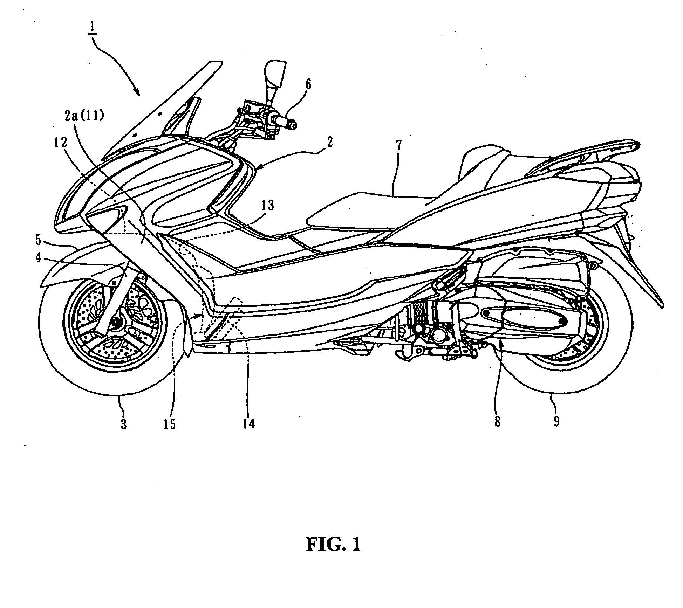

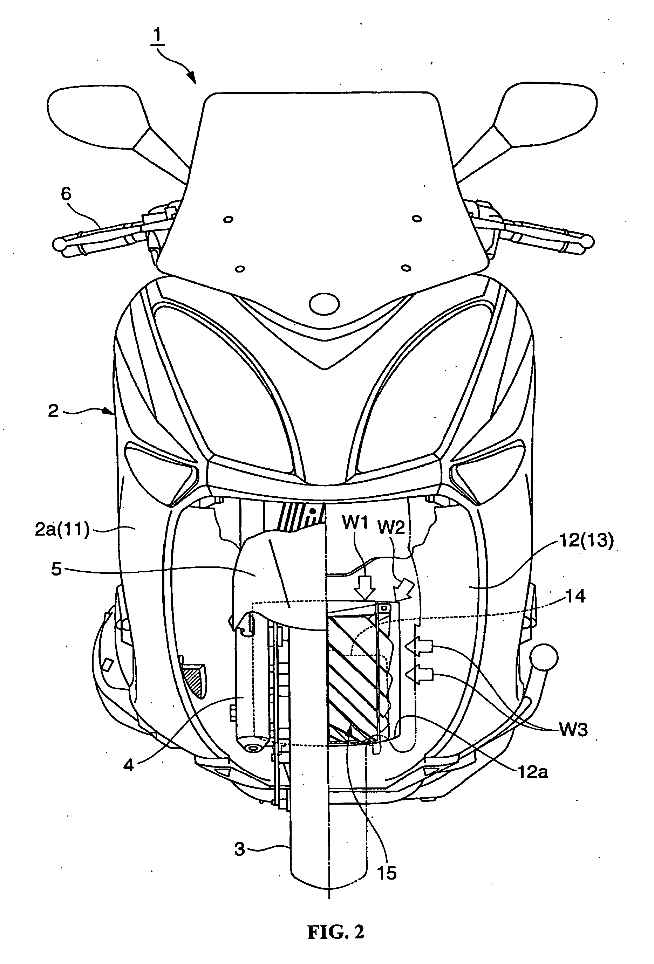

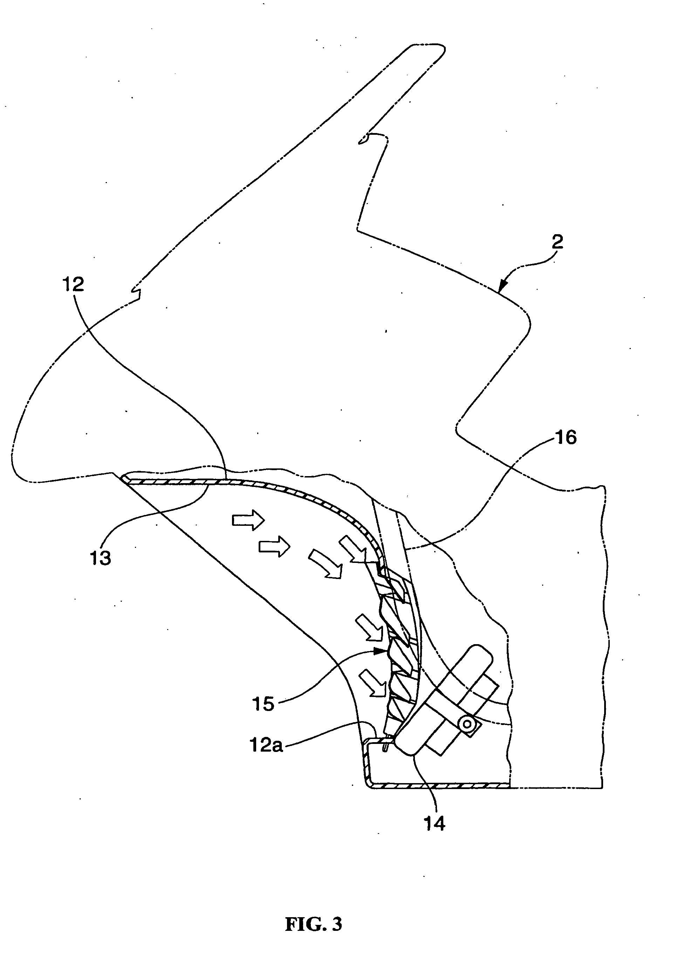

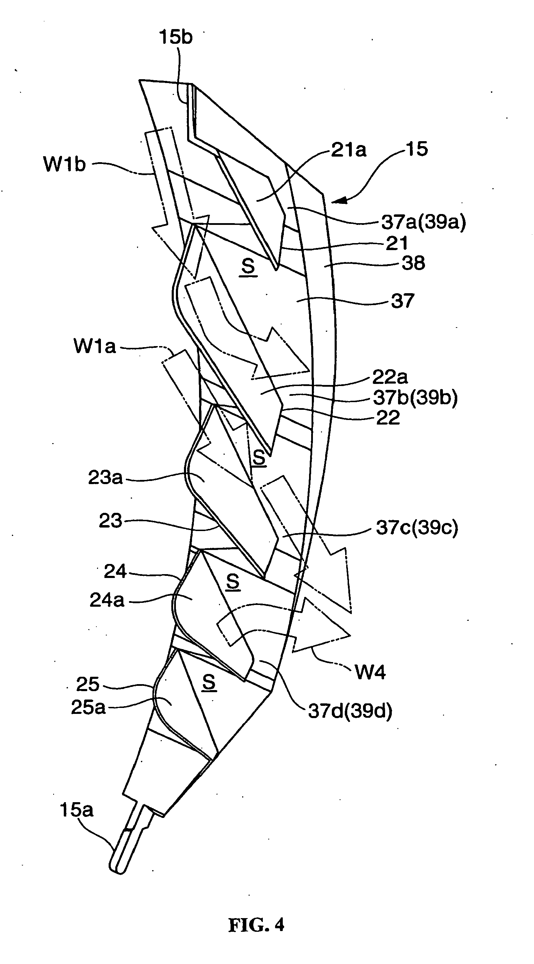

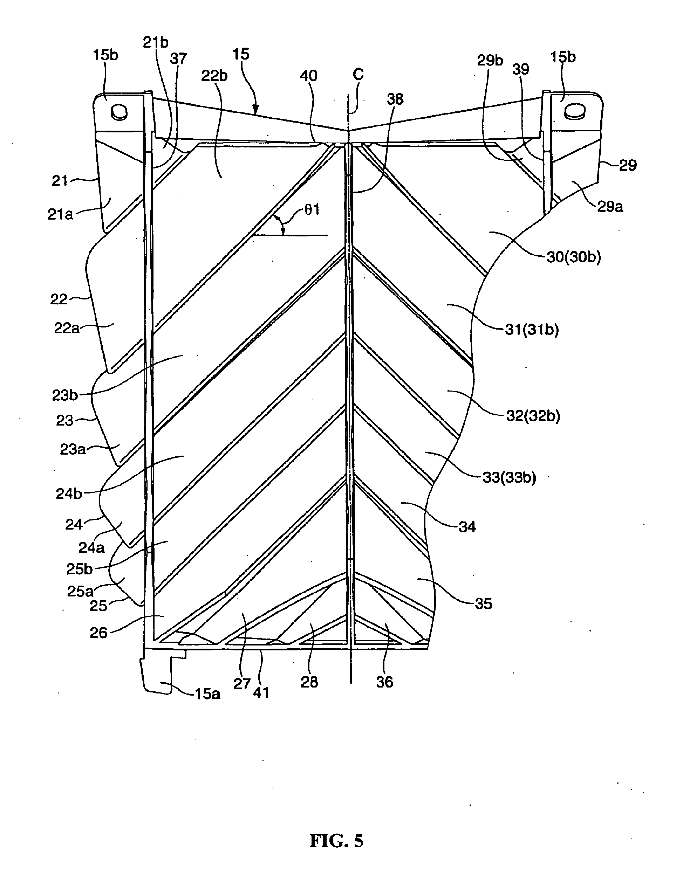

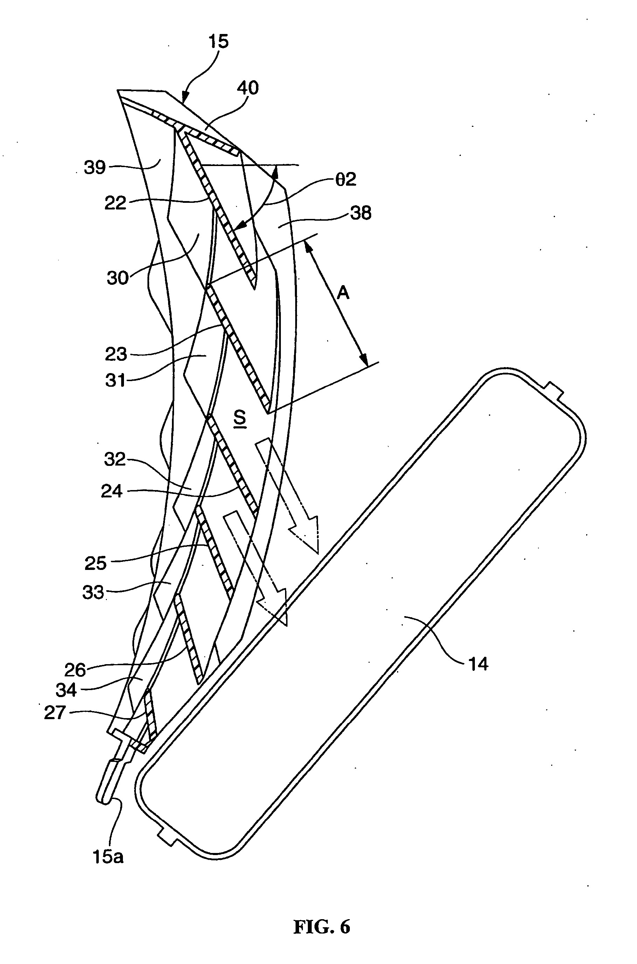

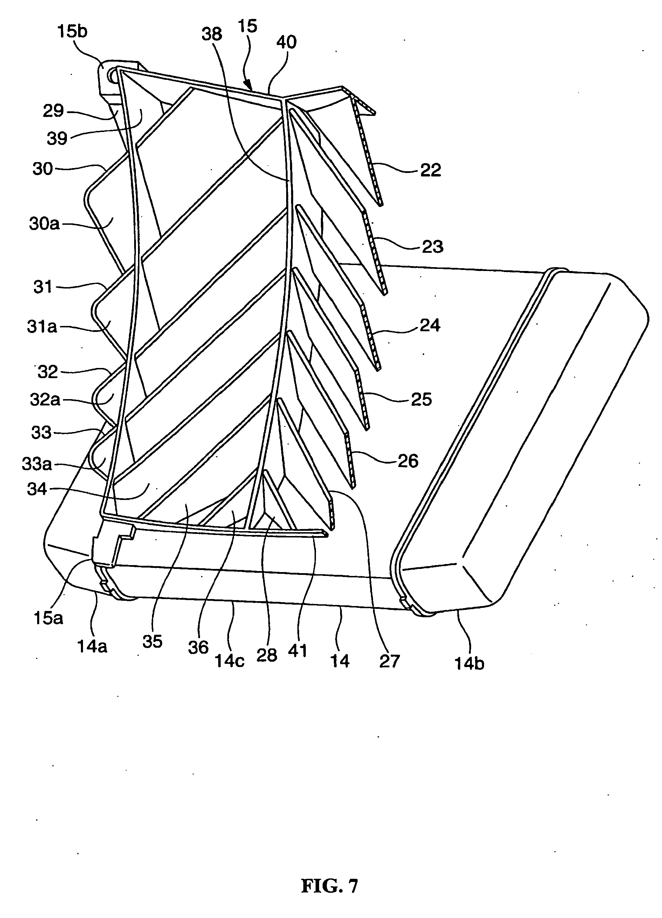

FIG. 1 is a side view of a motorcycle according to an embodiment of the present invention, and FIG. 2 is a front view of the motorcycle. In FIG. 2, half of the front wheel and the surrounding members on the left side of a vehicle body are omitted in order to expose an air duct member located to the rear. FIG. 3 is a cross sectional view that shows a recess of a cowling, an air duct member, and a radiator. FIG. 4 is a side view of the air duct member, and FIG. 5 is a rear view of the air duct member. In FIG. 5, a section on the right side of the vehicle body is omitted. FIG. 6 is a cross sectional view of the air duct member. In FIG. 6, the radiator is also drawn in order to illustrate the positional relationship of the air duct member with respect to the radiator. FIG. 7 is a perspective view of the air duct member and the radiator. In FIG. 7, a section of the air duct member on the left side of the vehicle body has been cut away.

In the figures, reference numeral 1 indicates a motorcycle of the embodiment. The motorcycle 1 is a scooter motorcycle, and is provided with a cowling 2 that covers a vehicle body. In FIG. 1, reference numeral 3 indicates a front wheel, 4 a front fork, 5 a front wheel fender, 6 a steering handle, 7 a seat, 8 a unit swing type drive unit, and 9 a rear wheel.

A front section 2a of the cowling 2 forms a leg shield that covers legs of a rider, who is sitting straddled over the seat 7, from the front side of the vehicle body. The front section 2a covers the rear upper side of the front wheel 3. The front section 2a of the cowling 2 in this embodiment includes a cowling main body 11 that forms an external member, and an inner panel 12 that is disposed inside the cowling main body 11.

The inner panel 12 is formed to have a protruding shape that extends toward the rear of the vehicle body. A recess 13 is formed in the inside of the inner panel 12. The recess 13 prevents the occurrence of interference with the front wheel 3, the front fork 4, etc. that are turned with the steering handle 6. In addition, as can be seen from FIG. 2 and FIG. 3, the recess 13 is formed to open to the front and to the bottom of the vehicle body. An upper section of the front wheel 3 at the rear side of the vehicle body faces the inside of the recess 13 from the front.

An air duct member 15 is provided at a rear end section within the recess 13. The air duct member 15 inhibits dirty water thrown up by the front wheel 3 that has not been blocked by the fender 5 from directly hitting a radiator 14 that is positioned to the rear, and guides running wind to the radiator 14.

As shown in FIG. 7, the radiator 14 has a structure including a cooling member 14c positioned between tanks 14a, 14b at either side in the vehicle width direction. Coolant flows in the vehicle width direction within the cooling member 14c.

The radiator 14, as can be seen from FIG. 3, is located at a position at the lowest point of the front section 2a of the cowling 2, and is supported by down tubes 16 of the vehicle body frame. The down tubes 16 are provided as a symmetric pair in the vehicle width direction, and support both ends of the radiator 14 in the vehicle width direction. The radiator 14 of the embodiment, as shown in FIG. 3, is attached to the down tubes 16 such that the cooling member 14c inclines upward to the rear. The radiator 14 or an oil cooler, not shown, forms a heat exchanger of the invention.

The air duct member 15, as shown in FIG. 3, has a shape with a height that is larger than the radiator 14, and is provided at a position in the vicinity of the front of the radiator 14 such that the periphery of the air duct member 15 is surrounded by the cowling 2 (inner panel 12). More specifically, the air duct member 15 is attached to the inner panel 12 by a lower end section and an upper end section such that the air duct member 15 is fitted in to an opening 12a (refer to FIG. 3) formed in the inner panel 12.

The attachment structure of the lower end section of the air duct member 15, as shown in FIG. 3, adopts a structure in which an engagement tab 15a (refer to FIG. 5) provided so as to protrude downward at the lower end section of the air duct member 15 is engaged with a lower end section of the inner panel 12. In addition, the attachment structure of the upper end section of the air duct member 15, as shown in FIG. 3, adopts a structure in which an engagement tab 15b (refer to FIG. 5) provided at the top end section of the air duct member 15 is attached to the inner panel 12 and to an attachment bracket (not shown in the figure) of the down tubes 16.

The air duct member 15, as can be seen from FIG. 4 to FIG. 7, is provided with first to sixteenth cooling air ducts 21 to 36 that are positioned in a line with gaps therebetween in the upward-downward direction. As can be seen from FIG. 5, the air duct member 15 includes, with the cooling air ducts 21 to 36, three vertical plates 37 to 39 that extend in the upward-downward direction, an upper horizontal plate 40 that connects upper end sections of the neighboring vertical plates 37 to 39, and a lower horizontal plate 41 that connects lower end sections of the neighboring vertical plates 37 to 39. These members are formed as an integrated unit using a synthetic resin material.

The three vertical plates 37 to 39 have a main surface that is oriented toward the vehicle width direction, and are formed to extend longitudinally in the upward-downward direction while extending in the front-rear direction of the vehicle body. The vertical plates 37 to 39 are provided at a central portion in the vehicle width direction and at either side in the vehicle width direction of the air duct member 15. The air duct member 15 of this embodiment has a structure in which the vertical plate 38 that is positioned centrally among the three vertical plates 37 to 39 is located at the center in the vehicle width direction of the vehicle body frame, and extends in the upward-downward direction and is attached to the inner panel 12 (vehicle body frame) (refer to FIG. 3). Note that, vertical plates can be provided, as an alternative to being provided at three positions in the air duct member 15 as in the embodiment, at two positions that are apart from each other in the vehicle width direction. For example, vertical plates can be provided at two positions, namely, at either side in the vehicle width direction of the air duct member 15.

If the above-described structure is adopted, the cooling air ducts are formed by the integrated second to eighth cooling air ducts 22 to 28 positioned to the left side of the vehicle body and the tenth to sixteenth cooling air ducts 30 to 36 positioned to the right side of the vehicle body. For example, an end section at the vehicle body inner side of the third cooling air duct 23 is integrated with an end section at the vehicle body inner side of the eleventh cooling air duct 31.

The plurality of cooling air ducts 21 to 36, as shown in FIG. 5, are provided in a left-right symmetrical manner in the air duct member 15. The specific details of each structural element of the structure of the cooling air ducts 21 to 36 will now be explained.

As shown in FIG. 5, the cooling air ducts 21 to 36 are formed to have line symmetry about an axis of symmetry, namely, an imaginary line C, that extends in the upward-downward direction along the central portion in the vehicle width direction of the air duct member 15.

The cooling air ducts 21 to 36, as can be seen from FIG. 2 and FIG. 5, are formed to incline, when viewed from a front-rear direction of the vehicle body, from end sections at the outside in the vehicle width direction toward the central portion in the vehicle width direction with gradually changing heights. The cooling air ducts 21 to 36 of the embodiment are formed to incline such that the cooling air ducts 21 to 36 are positioned further to the lower side as they extend from the central portion in the vehicle width direction of the air duct member 15 toward the sides.

More particularly, among the cooling air ducts 21 to 36, the first to eighth cooling air ducts 21 to 28 positioned to the left side of the vehicle body are formed to incline downward to the left when viewed from the rear of the vehicle body, as shown in FIG.5. Furthermore, the ninth to sixteenth cooling air ducts 29 to 36 positioned to the right side of the vehicle body are formed to incline downward to the right when viewed from the rear of the vehicle body.

Neither the first cooling air duct 21 nor the ninth cooling air duct 29 that are positioned furthest to the top among the cooling air ducts 21 to 36 are formed to extend as far as the central portion in the vehicle width direction, and the cooling air ducts 21 and 29 have an angle of inclination that is set to be the same as that of the other cooling air ducts. It has been determined by experimentation by the inventor that if the angle of inclination θ1 of the cooling air ducts 21 to 36 with respect to the horizontal (refer to FIG. 5) is in the range of 30° to 60°, then the same effects as achieved by this embodiment can be achieved. This embodiment describes an example in which the cooling air ducts 21 to 36 are formed to have the angle of inclination that demonstrates the effects most clearly. This effective angle of inclination is 45°.

In this embodiment, among the cooling air ducts 21 to 36, the cooling air ducts excluding the six cooling air ducts positioned at the lower end section side of the air duct member 15 (the sixth to eighth cooling air ducts 26 to 28, and the fourteenth to sixteenth cooling air ducts 34 to 36) have protruding portions 21a, 22a, 23a, 24a, 25a, 29a, 30a, 31a, 32a, 33a that protrude further toward the outside in the vehicle width direction than the vertical plates 37, 39 positioned at either side of the air duct member 15. As a result, the vertical plate 37, as can be seen from FIG. 5, provides support in the vicinity of an outer side in the vehicle width direction of the first to fifth cooling air ducts 21 to 25. Moreover, the vertical plate 39 provides support in the vicinity of an outer side in the vehicle width direction of the ninth to thirteenth cooling air ducts 29 to 33 as shown in FIG. 7.

In the air duct member 15 of the embodiment, the position at which the protruding portions 21a, 22a, 23a, 24a, 25a of the first to fifth cooling air ducts 21 to 25 are connected to the vertical plate 37, and the position at which inside portions 21b, 22b, 23b, 24b, 25b of the first to fifth cooling air ducts 21 to 25 positioned further to the inside in the vehicle width direction than the vertical plate 37 are connected to the vertical plate 37 are the same position. In other words, the first to fifth cooling air ducts 21 to 25 are formed to pass through the vertical plate 37. Furthermore, the protruding portions 21a, 22a, 23a, 24a, 25a and the inside portions 21b, 22b, 23b, 24b, 25b of each cooling air duct are disposed in a coplanar manner. In this embodiment, the angle of inclination (shown as θ1 in FIG. 5) of the inside portions of the first to fifth cooling air ducts 21 to 25 with respect to the horizontal is the same as the angle of inclination of the protruding portions with respect to the horizontal. However, the angle of inclination of the inside portions and the protruding portions may be changed.

In addition, the position at which the protruding portions 29a, 30a, 31a, 32a, 33a of the ninth to thirteenth cooling air ducts 29 to 33 are connected to the vertical plate 39, and the position at which inside portions 29b, 30b, 31b, 32b, 33b of the ninth to thirteenth cooling air ducts 29 to 33 positioned further to the inside in the vehicle width direction than the vertical plate 39 are connected to the vertical plate 39 are the same position. In other words, the ninth to thirteenth cooling air ducts 29 to 33 are formed to pass through the vertical plate 39. Furthermore, the protruding portions 29a, 30a, 31a, 32a, 33a and the inside portions 29b, 30b, 31b, 32b, 33b of each cooling air duct are disposed in a coplanar manner. In this embodiment, the angle of inclination (shown as θ1 in FIG. 5) of the inside portions of the ninth to thirteenth cooling air ducts 29 to 33 with respect to the horizontal is the same as the angle of inclination of the protruding portions with respect to the horizontal. However, the angle of inclination of the inside portions and the protruding portions may be changed.

The dimension of the vertical plates 37, 39 in the front-rear direction of the vehicle body, as shown in FIG. 4, is the same as or larger than the dimension in the front-rear direction of the vehicle body of the connection portions of the protruding portions 21a, 22a, 23a, 24a, 25a, 29a, 30a, 31a, 32a, 33a and the vertical plates 37, 39. Moreover, as shown in FIG. 4, the vertical plates 37, 39 are provided with extending portions 37a to 37d and 39a to 39d that extend further toward the rear than the position of a rear end in the vehicle body front-rear direction of the connection portions of the protruding portions 21a, 22a, 23a, 24a, 25a, 29a, 30a, 31a, 32a, 33a and the vertical plates 37, 39.

The cooling air ducts 21 to 36, as can be seen from FIG. 4 and FIG. 6, are formed to incline so as to be positioned further toward the rear of the vehicle body, when viewed from a side of the vehicle body, from end sections at the outside in the vehicle width direction toward the central portion in the vehicle width direction. More specifically, the first to eighth cooling air ducts 21 to 28 positioned to the left side of the vehicle body are oriented further toward the right side of the vehicle body than the front, and the ninth to sixteenth cooling air ducts 29 to 36 positioned to the right side of the vehicle body are oriented further toward the left side of the vehicle body than the front.

The position in the front-rear direction of the cooling air ducts 21 to 36, as can be seen from FIG. 3, FIG. 4, and FIG. 6, is located on an imaginary arc that protrudes toward the rear when seen in a side view. The vertical plates 37 to 39 are formed in an arc shape when seen in the side view so as to extend along this imaginary arc. As a result, among the cooling air ducts 21 to 36, the second and third cooling air ducts 22, 23 and the tenth and eleventh cooling air ducts 30, 31 are positioned furthest to the rear side of the vehicle body.

The cooling air ducts 21 to 36, as shown in FIG. 4 and FIG. 6, are formed to incline so as to be positioned gradually further to the rear as the cooling air ducts 21 to 36 extend from a top end to a bottom end thereof. In other words, a front surface of the cooling air ducts 21 to 36 is oriented downward and toward the front of the vehicle body such that dirty water thrown up by the front wheel 3 hits the front surface. Moreover, a rear surface of the cooling air ducts 21 to 36 is oriented upward and toward the rear of the vehicle body such that running wind that flows along a rear wall surface and side surfaces of the recess 13 and along the inside of the recess 13 hits the rear surface and is guided toward the radiator 14, as indicated by the arrows W1 to W3 in FIG. 2.

The arrow W1 shown in FIG. 2 indicates the running wind flowing along the rear wall surface of the recess 13, and the arrow W2 indicates the running wind flowing along the rear wall surface and the vehicle width direction side surfaces of the recess 13 toward the air duct member 15 from the diagonally upward direction. The arrow W3 indicates the running wind that flows along both side surfaces of the recess 13 toward the air duct member 15 from the side.

An angle of inclination θ2 (refer to FIG. 6) with respect to the horizontal of the cooling air ducts 21 to 36 when viewed in the side view is larger than that of the cooling air ducts positioned therebelow as can be seen from FIG. 4 and FIG. 6.

A width A (refer to FIG. 6) of a front surface (rear surface) of the cooling air ducts 21 to 36, or in other words the width in the direction orthogonal to the length direction of the cooling air ducts 21 to 36, is smallest at the cooling air ducts 28, 36 positioned furthest toward the bottom, and becomes larger as the cooling air ducts are progressively positioned upward.

Pairs of upward-downward direction neighboring cooling air ducts 21 to 36 among the cooling air ducts 21 to 36 are formed such that a lower edge of the cooling air duct positioned to the upper side and an upper edge of the cooling air duct positioned to the lower side overlap with each other when viewed in the front-rear direction of the vehicle body and have a distance of separation between each other in the front-rear direction of the vehicle body, as shown in FIG. 4 to FIG. 6. In addition, the upper edge of the cooling air duct positioned to the lower side is located further to the front of the vehicle body than the lower edge of the cooling air duct positioned to the upper side.

As a result, in the air duct member 15, an air flow gap S is formed between all of the cooling air ducts 21 to 36, and running wind is able to pass through the air flow gap S and be guided to the radiator 14.

According to the motorcycle 1 provided with the air duct member 15 with the above-described structure, dirty water thrown up by the front wheel 3 during running hits the cooling air ducts 21 to 36 from the lower front side. The front surfaces of the plurality of cooling air ducts 21 to 36 are formed to be oriented toward the lower front direction. Thus, the structure ensures that the dirty water hits the front surface of the cooling air ducts 21 to 36 . Accordingly, the cooling air ducts 21 to 36 can be used to block dirty water from directly hitting the radiator 14.

On the other hand, running wind enters inside the recess 13 during running from both sides and the top of the front wheel 3. The running wind hits the rear wall surface and the vehicle width direction side surfaces of the recess 13 and changes direction. The running wind, that has had its flow direction changed inside the recess 13, flows in the directions generally indicated by the arrows W1 to W3 shown in FIG. 2.

More particularly, the flow direction of the running wind that enters inside the recess 13 is changed by the rear wall surface and the side surfaces of the recess 13 so that the running wind flows toward the air duct member 15 from above and diagonally above and from either side of the air duct member 15.

In FIG. 2, the running wind that flows from above the air duct member 15 indicated by the arrow W1 flows in to the air duct member 15 as indicated by the arrows W1a and W1b shown in FIG. 4. More particularly, as shown in FIG. 4, the running wind that flows parallel to the inclined cooling air ducts 21 to 36 when viewed from the side passes through the air flow gap S and is guided to the radiator 14 as indicated by the arrow W1a.

In addition, the running wind that hits the rear surface of the cooling air ducts 21 to 36 from above is caused to change flow direction as a result of hitting the rear surface, as indicated by the arrow W1b shown in FIG. 4. As a result, the running wind flows in to the air flow gap S and is finally guided to the radiator 14.

In FIG. 2, some of the running wind that is guided to the air duct member 15 from diagonally above flows directly in to the air flow gap S as indicated by the arrow W2 in a similar manner to the running wind indicated by the arrow W1 . This running wind is then caused to change flow direction as a result of hitting the rear surface of the cooling air ducts 21 to 36, and flows toward the radiator 14. Some of the running wind that flows as indicated by the arrow W2 and the running wind guided to the air duct member 15 from the side as indicated by the arrow W3 (the running wind that has a directional component toward the inside in the vehicle width direction) hits the rear surface of the cooling air ducts 21 to 36, the vertical plates 37, 39 to the outside in the vehicle width direction, and the vertical plate 38 positioned in the center in the vehicle width direction, as indicated by the arrow W4 in FIG. 4. As a result, the flow direction of the running wind flowing as indicated by the arrow W2 and the flow direction of the running wind indicated by the arrow W3 is changed, and the running wind is guided toward the radiator 14.

Accordingly, in the motorcycle 1 provided with the air duct member 15 of this embodiment, the running wind that flows downward inside the recess 13 along the rear wall surface of the recess 13 (indicated by the arrow W1) can also be guided to the radiator 14. Thus, as compared to the known air duct member, the quantity of running wind that is guided to the radiator 14 is increased. In addition, dirty water thrown up by the front wheel 3 hits the front surface of the first to sixteenth cooling air ducts 21 to 36 from the lower front side, and the dirty water that hits the cooling air ducts flows downward along the first to sixteenth cooling air ducts 21 to 36 that incline diagonally when viewed from the front of the vehicle body. As a result, the dirty water thrown up by the front wheel 3 is reliably inhibited from flying toward the radiator 14.

As a result, the dirty water thrown up by the front wheel 3 can be inhibited from directly hitting the radiator 14, and the cooling performance of the radiator 14 can be improved. Thus, according to the embodiment, even if the radiator described in JP-A-2006-142911 is used as the radiator 14, cooling performance can be improved. In addition, according to the embodiment, even if a radiator that is smaller than that described in JP-A-2006-142911 is used, cooling performance comparable to that of the radiator described in this prior art reference can be achieved. As a result, in the case that improved cooling performance is not required, a relatively small radiator can be used, thereby allowing costs to be reduced and the size of the vehicle body to be made smaller.

Moreover, according to the embodiment, the air flow gap S formed between the neighboring cooling air ducts 21 to 36 opens toward both vehicle width direction side sections at the upper section inside the recess 13. Thus, running wind that flows diagonally downward along the rear wall surface of the recess 13 toward the lower side of the vehicle width direction central portion inside the recess 13 from the vehicle width direction side sections at the upper section inside the recess 13, namely, the running wind that flows in the direction indicated by the arrow W2 in FIG. 2, can easily enter in to the gap S between the neighboring cooling air ducts 21 to 36. As a result, the quantity of running wind guided to the radiator 14 can be increased still further.

According to the embodiment, the running wind that flows to the air duct member 15 from the outside in the vehicle width direction, namely, some of the running wind that flows in the direction indicated by the arrow W2 and the running wind indicated by the arrow W3 in FIG. 2, hits the cooling air ducts 21 to 36 and the vertical plates 37 to 39, and is caused to flow toward the radiator 14 as a result of being pushed by the running wind that is flowing between neighboring cooling air ducts 21 to 36.

Therefore, according to the embodiment, the running wind that flows in from the side of the air duct member 15 can also be guided toward the radiator 14.

According to the embodiment, the position at which the protruding portions 21a, 22a, 23a, 24a, 25a, 29a, 30a, 31a, 32a, 33a of the first to fifth cooling air ducts 21 to 25 and the ninth to sixteenth cooling air ducts 29 to 34 are connected to the vertical plates 37 and 39, and the position at which inside portions 21b, 22b, 23b, 24b, 25b, 29b, 30b, 31b, 32b, 33b of the cooling air ducts positioned further to the inside in the vehicle width direction than the vertical plates are connected to the vertical plates 37 and 39 are the same position. In addition, the inside portions and the protruding portion are disposed in a coplanar manner. As a result, if the air duct member 15 is formed as an integrated unit using synthetic resin material, the structure of the molding die is simplified.

According to the embodiment, the dimension of the vertical plates 37, 39 in the front-rear direction of the vehicle body is the same as or larger than the dimension in the front-rear direction of the vehicle body of the connection portions of the protruding portions 21a, 22a, 23a, 24a, 25a, 29a, 30a, 31a, 32a, 33a and the vertical plates 37, 39. Moreover, the vertical plates 37, 39 are provided with the extending portions 37a to 37d and 39a to 39d that extend further toward the rear than the position of the rear end in the vehicle body front-rear direction of the connection portions of the protruding portions and the vertical plates 37, 39. As a result, according to the embodiment, among the running wind that is guided toward the radiator 14 by the protruding portions of the first to fifth cooling air ducts 21 to 25 and the ninth to thirteenth cooling air ducts 29 to 33, the running wind having a directional component toward the inside in the vehicle width direction is guided toward the rear of the vehicle body (toward the radiator 14) by the vertical plates 37 to 39.

According to the embodiment, the air duct member 15 is an integrated unit that is made using synthetic resin. As a result, the air duct member can be produced at low cost due to the benefits of using mass production.

According to the embodiment, the first to sixteenth cooling air ducts 21 to 36 are formed to incline such that the cooling air ducts 21 to 36 are gradually positioned further to the rear side of the vehicle body as the cooling air ducts 21 to 36 extend from the end section at the outside in the vehicle width direction to the vehicle width direction central portion. Accordingly, the air duct member 15 avoids interference with the front wheel 3, and can be positioned as far as possible toward the front of the vehicle body. Accordingly, more running wind can be guided toward the radiator 14.

According to the embodiment, the first to sixteenth cooling air ducts 21 to 36 are formed to incline such that the cooling air ducts 21 to 36 are gradually positioned further to the rear of the vehicle body as the cooling air ducts 21 to 36 extend from the upper end to the lower end. A portion of the cooling air ducts, namely, pairs of cooling air ducts that neighbor each other in the upward-downward direction, are formed such that the lower edge of the cooling air duct positioned to the upper side and the upper edge of the cooling air duct positioned to the lower side overlap with each other when viewed in the front-rear direction and have a distance of separation between each other in the front-rear direction of the vehicle body.

As a result, it is even more certain that dirty water that is thrown up by the front wheel 3 will hit the front surface of the cooling air ducts 21 to 36. The dirty water that hits the cooling air ducts 21 to 36 flows downward along the cooling air ducts 21 to 36 that are diagonally inclined when viewed from the front of the vehicle body. Thus, according to the embodiment, the dirty water that is thrown up by the front wheel 3 can be reliably inhibited from flying toward the radiator 14, and the cooling air ducts 21 to 36 cause the dirty water to run away downward from the both sides of the air duct member 15.

According to the embodiment, the upper edge of the cooling air ducts positioned to the lower side are positioned further toward the front of the vehicle body than the lower edge of the cooling air ducts positioned to the upper side. Thus, when the plurality of cooling air ducts are viewed from the lower front side, as opposed to when they are viewed from the front, the width of the section where neighboring cooling air ducts overlap is comparatively large. Accordingly, dirty water thrown up by the front wheel 3 can be inhibited even more reliably from flying toward the radiator 14 by the cooling air ducts.

According to the embodiment, the cooling air ducts 21 to 36 are formed to have left-right symmetry, and to incline when viewed from the front of the vehicle body. Thus, running wind can be guided toward the radiator 14 from a wide area that extends generally throughout the entire vehicle width direction area inside the recess 13. As a result, as described in the embodiment, even if a relatively large radiator is provided at the vehicle width direction central portion as the radiator 14, adequate running wind can be fed to the large sized radiator 14.

The above-described embodiment explains an example in which the cooling air ducts 21 to 36 incline such that the sides of the cooling air ducts 21 to 36 are formed to be lower than the vehicle width direction central portion. However, the direction of incline of the cooling air ducts 21 to 36 may be reversed. If this structure is adopted, the cooling air ducts 21 to 36 incline such that the sides of the cooling air ducts 21 to 36 are higher than the vehicle width direction central portion.

The above-described embodiment explains an example in which running wind is guided to the radiator 14 by the air duct member 15. However, the invention is not limited to this configuration and may be applied to a motorcycle that adopts a structure in which running wind is guided by the air duct member 15 to an oil cooler (not shown in the figures) positioned to the rear of the recess 13. In addition, it will be readily apparent that the invention may also be applied to a motorcycle in which a heat exchanger like a radiator or an oil cooler is mounted at a vehicle width direction side section.

Moreover, this embodiment describes an example in which the invention is applied to the scooter motorcycle 1. However, the invention may be applied to any type of motorcycle so long as the motorcycle is provided with the air duct member 15 in the cowling 2.

### Description of the Reference Numerals and Signs

1 ... Motorcycle, 2 ... Cowling, 2a ... Front section, 3 ... Front wheel, 4 ... Front fork, 12 ... Inner panel, 13 ... Recess, 14 ... Radiator, 15 ... Air duct member, 21 to 36 ... First to sixteenth Cooling air ducts, 21a, 22a, 23a, 24a, 25a, 29a, 30a, 31a, 32a, 33a ... Protruding portion, 21b, 22b, 23b, 24b, 25b, 29b, 30b, 31b, 32b, 33b ... Inside portion, 37 to 39 ... Vertical plate, 37a to 37d, 39a to 39d ... Extending portion, S ... Air flow gap.

## Claims

1. A motorcycle (1) comprising:
a cowling (2) defining a recess (13) adapted to partially cover a front wheel (3), the recess (13) being formed to have a protruding shape that extends towards the rear of the motorcycle;
a heat exchanger (14) disposed to the rear of the recess (13); and
an air duct member (15) provided at a rear end section within the recess (13) and comprising a plurality of cooling air ducts (21 to 36) arranged between upper to lower regions of the air duct member (15), and adapted to guide air toward the heat exchanger (14),
wherein a front surface of each cooling air duct (21 to 36) is oriented towards the front lower side of the vehicle, and a rear surface of each cooling air duct (21 to 36) is oriented towards a rear upper side of the vehicle, and the cooling air ducts (21 to 36) are formed to incline from a side region of the air duct member (15) to a central region of the air duct member (15),
wherein the cooling air ducts (21 to 36) are formed to incline downwardly from the central region of the air duct member (15) to the side region of the air duct member (15).

2. The motorcycle (1) according to claim 1, wherein the air duct member (15) comprises a vertical plate (37) having a main surface that extends in the front-rear direction of the vehicle and is adapted to provide support in the vicinity of an outer side of the plurality of cooling air ducts (21 to 36), wherein the cooling air ducts (21 to 36) comprise protruding portions (21a) that protrude further to the outside in the vehicle width direction than the vertical plate (37).

3. The motorcycle (1) according to claim 2, wherein the respective positions at which the protruding portions (21a) of the cooling air ducts (21 to 36) connect to an outer surface of the vertical plate (37) and the inside portions (21b) of the cooling air ducts (21 to 36) connect to an inner surface of the vertical plate (37) are aligned with each other.

4. The motorcycle (1) according to claim 3, wherein the inside and protruding portions (21b, 21a) of the cooling air ducts (15) are disposed in a coplanar manner.

5. The motorcycle (1) according to claim 2, 3 or 4, wherein a dimension of the vertical plate (37) in the vehicle body front-rear direction is greater than or equal to a dimension in the vehicle body front-rear direction of a connection portion of the protruding portion (21a) and the vertical plate (37).

6. The motorcycle (1) according to any one of claims 2 to 5, wherein the vertical plate (37) comprises an extending portion (37a) extending rearwardly of a connection portion of the protruding portion (21a) and the vertical plate (37).

7. The motorcycle(1) according to any preceding claim, wherein the air duct member (15) comprises an integrated unit at least partially formed from a synthetic resin material.

8. The motorcycle (1) according to any preceding claim, wherein the plurality of cooling air ducts (21 to 36) extend rearwardly of the vehicle from the side region to the central region of the air duct member (15).

9. The motorcycle (1) according to any preceding claim, wherein the plurality of cooling air ducts (21 to 36) are gradually positioned further to the rear of the vehicle as the cooling air ducts (21 to 36) extend from an upper region to a lower region of the air duct member (15).

10. The motorcycle (1) according to any preceding claim, wherein a lower edge of one cooling air duct (22a) is positioned at a lower position than an upper edge of an immediately upper adjacent cooling air duct (21a), and said lower and upper edges of adjacent cooling air ducts (22a, 21a) have a distance of separation therebetween in the front-rear direction of the vehicle.

11. The motorcycle (1) according to any preceding claim, wherein an upper edge of one cooling air duct (22a) is located further to the front of the vehicle than the lower edge of an immediately upper adjacent cooling air duct (21a).

12. The motorcycle (1) according to any preceding claim, wherein the cooling air ducts (21 to 36) are formed to have line symmetry along the central region of the air duct member.

13. A motorcycle (1) according to any of claims 1 to 12, wherein the cowling (2), covers a rear upper side of a front wheel (3), the recess (13) opens toward a front lower side of a vehicle body and faces an upper section of the front wheel (3) at a rear side of the vehicle body,
the air duct member (15) is arranged such that a periphery of the air duct member (15) is surrounded by the cowling (2), the air duct member (15) being arranged to guide running wind from inside the recess (13) toward the heat exchanger (14), the plurality of cooling air ducts (21 to 36) being lined up in an upward-downward direction, and when the cooling air ducts (21 to 36) are viewed from the front of the vehicle body, the cooling air ducts (21 to 36) are formed to incline with gradually changing height as the cooling air ducts (21 to 36) extend from an end section at an outside in the vehicle width direction to a vehicle width direction central portion.

## Patentansprüche

1. Motorrad (1), das Folgendes umfasst:
eine Verkleidung (2), die eine Aussparung (13) definiert, die so gestaltet ist, dass sie ein Vorderrad (3) teilweise bedeckt, wobei die Aussparung (13) so ausgebildet ist, dass sie eine vorstehende Form hat, die zum hinteren Teil des Motorrads hin verläuft;
einen Wärmetauscher (14), der am hinteren Teil der Aussparung (13) angeordnet ist; und
ein Luftleitungselement (15), das an der hinteren Endsektion in der Aussparung (13) vorgesehen ist und mehrere Kühlluftleitungen (21 bis 36) umfasst, die zwischen einer oberen und einer unteren Region des Luftleitungselements (15) angeordnet und so gestaltet sind, dass sie Luft zum Wärmetauscher (14) leiten,
wobei eine Frontfläche jeder Kühlluftleitung (21 bis 36) zur vorderen unteren Seite des Fahrzeugs hin orientiert ist, und eine Rückfläche jeder Kühlluftleitung (21 bis 36) zur hinteren oberen Seite des Fahrzeugs hin orientiert ist, und die Kühlluftleitungen (21 bis 36) so ausgebildet sind, dass sie von einer Seitenregion des Luftleitungselements (15) zu einer mittleren Region des Luftleitungselements (15) hin geneigt sind,
wobei die Kühlluftleitungen (21 bis 36) so ausgebildet sind, dass sie von der mittleren Region des Luftleitungselements (15) zur Seitenregion des Luftleitungselements (15) hin abwärts geneigt sind.

2. Motorrad (1) nach Anspruch 1, wobei das Luftleitungselement (15) eine vertikale Platte (37) mit einer Hauptfläche umfasst, die in der Fahrzeugrichtung von vorne nach hinten verläuft und so gestaltet ist, dass sie in der Nähe einer Außenseite der mehreren Kühlluftleitungen (21 bis 36) als Abstützung dienen, wobei die Kühlluftleitungen (21 bis 36) vorstehende Abschnitte (21a) umfassen, die weiter zur Außenseite in Fahrzeugbreitenrichtung vorstehen als die vertikale Platte (37).

3. Motorrad (1) nach Anspruch 2, wobei die jeweiligen Positionen, in denen die vorstehenden Abschnitte (21a) der Kühlluftleitungen (21 bis 36) mit einer Außenfläche der vertikalen Platte (37) verbunden sind und die inneren Abschnitte (21b) der Kühlluftleitungen (21 bis 36) mit einer inneren Fläche der vertikalen Platte (37) verbunden sind, miteinander fluchten.

4. Motorrad (1) nach Anspruch 3, wobei die inneren und vorstehenden Abschnitte (21b, 21a) der Kühlluftleitungen (15) aufkoplanare Weise angeordnet sind.

5. Motorrad (1) nach Anspruch 2, 3 oder 4, wobei eine Abmessung der vertikalen Platte (37) in der Fahrzeugkarosserierichtung von vorne nach hinten gleich oder größer als eine Abmessung in der Fahrzeugkarosserierichtung von vorne nach hinten eines Verbindungsabschnitts des vorstehenden Abschnitts (21 a) und der vertikalen Platte (37) ist.

6. Motorrad (1) nach einem der Ansprüche 2 bis 5, wobei die vertikale Platte (37) einen Verlaufsabschnitt (37a) umfasst, der hinter einem Verbindungsabschnitt des vorstehenden Abschnitts (21a) und der vertikalen Platte (37) verläuft.

7. Motorrad (1) nach einem der vorherigen Ansprüche, wobei das Luftleitungselement (15) eine integrierte Einheit umfasst, die wenigstens teilweise aus einem Kunstharzmaterial gebildet ist.

8. Motorrad (1) nach einem der vorherigen Ansprüche, wobei die mehreren Kühlluftleitungen (21 bis 36) hinter dem Fahrzeug von der Seitenregion zur mittleren Region des Luftleitungselements (15) verlaufen.

9. Motorrad (1) nach einem der vorherigen Ansprüche, wobei die mehreren Kühlluftleitungen (21 bis 36) bei ihrem Verlauf von einer oberen Region zu einer unteren Region des Luftleitungselements (15) allmählich immer weiter hinten an dem Fahrzeug positioniert sind.

10. Motorrad (1) nach einem der vorherigen Ansprüche, wobei ein unterer Rand von einer Kühlluftleitung (22a) tiefer liegt als ein oberer Rand einer Kühlluftleitung (21a) unmittelbar darüber und wobei der untere und der obere Rand von benachbarten Kühlluftleitungen (22a, 21a) in der Fahrzeugrichtung von vorne nach hinten einen Trennabstand zwischen sich haben.

11. Motorrad (1) nach einem der vorherigen Ansprüche, wobei ein oberer Rand von einer Kühlluftleitung (22a) weiter vorne am Fahrzeug liegt als der untere Rand einer Kühlluftleitung (21 a) unmittelbar darüber.

12. Motorrad (1) nach einem der vorherigen Ansprüche, wobei die Kühlluftleitungen (21 bis 36) so ausgebildet sind, dass sie Liniensymmetrie entlang der mittleren Region des Luftleitungselementes haben.

13. Motorrad (1) nach einem der Ansprüche 1 bis 12, wobei die Verkleidung (2) eine hintere obere Seite eines Vorderrads (3) bedeckt, wobei die Aussparung (13) zu einer vorderen unteren Seite einer Fahrzeugkarosserie hin öffnet und einer oberen Sektion des Vorderrads (3) auf einer hinteren Seite der Fahrzeugkarosserie zugewandt ist,
das Luftleitungselement (15) so angeordnet ist, dass eine Peripherie des Luftleitungselements (15) von der Verkleidung (2) umgeben ist, wobei das Luftleitungselement (15) so angeordnet ist, dass es Fahrtwind von innerhalb der Aussparung (13) zum Wärmetauscher (14) leitet, wobei die mehreren Kühlluftleitungen (21 bis 36) in einer Richtung von oben nach unten ausgerichtet sind, und wenn die Kühlluftleitungen (21 bis 36) von der Vorderseite der Fahrzeugkarosserie her betrachtet werden, dann sind die Kühlluftleitungen (21 bis 36) so ausgebildet, dass die Kühlluftleitungen (21 bis 36) bei ihrem Verlauf von einer Endsektion auf einer Außenseite in Fahrzeugbreitenrichtung zu einem mittleren Abschnitt der Fahrzeugbreitenrichtung mit sich allmählich ändernder Höhe geneigt sind.

## Revendications

1. Motocyclette (1) comprenant :
un capot (2) définissant un évidement (13) conçu pour recouvrir partiellement une roue avant (3), l'évidement (13) étant formé de manière à avoir une forme saillante qui s'étend vers l'arrière de la motocyclette ;
un échangeur de chaleur (14) disposé vers l'arrière de l'évidement (13) ; et
un élément formant conduit d'air (15) prévu au niveau d'une section d'extrémité arrière dans l'évidement (13) et comprenant une pluralité de conduits d'air de refroidissement (21 à 36) agencés entre les régions supérieure et inférieure de l'élément formant conduit d'air (15), et conçus pour guider l'air vers l'échangeur de chaleur (14),
dans laquelle une surface avant de chaque conduit d'air de refroidissement (21 à 36) est orientée vers le côté inférieur avant du véhicule, et une surface arrière de chaque conduit d'air de refroidissement (21 à 36) est orientée vers un côté supérieur arrière du véhicule, et les conduits d'air de refroidissement (21 à 36) sont formés de manière à s'incliner d'une région latérale de l'élément formant conduit d'air (15) vers une région centrale de l'élément formant conduit d'air (15),
dans laquelle les conduits d'air de refroidissement (21 à 36) sont formés de manière à s'incliner vers le bas de la région centrale de l'élément formant conduit d'air (15) vers la région latérale de l'élément formant conduit d'air (15).

2. Motocyclette (1) selon la revendication 1, dans laquelle l'élément formant conduit d'air (15) comprend une plaque verticale (37) ayant une surface principale qui s'étend dans la direction de l'avant vers l'arrière du véhicule et qui est conçue pour réaliser un support dans le voisinage d'un côté extérieur de la pluralité de conduits d'air de refroidissement (21 à 36), dans laquelle les conduits d'air de refroidissement (21 à 36) comprennent des parties saillantes (21a) qui font saillie davantage vers l'extérieur dans la direction de largeur du véhicule que la plaque verticale (37).

3. Motocyclette (1) selon la revendication 2, dans laquelle les positions respectives au niveau desquelles les parties saillantes (21a) des conduits d'air de refroidissement (21 à 36) sont reliées à une surface extérieure de la plaque verticale (37) et les parties intérieures (21b) des conduits d'air de refroidissement (21 à 36) sont reliées à une surface intérieure de la plaque verticale (37) sont alignées les unes avec les autres.

4. Motocyclette (1) selon la revendication 3, dans laquelle les parties intérieures et saillantes (21b, 21a) des conduits d'air de refroidissement (15) sont disposées d'une manière coplanaire.

5. Motocyclette (1) selon la revendication 2, 3 ou 4, dans laquelle une dimension de la plaque verticale (37) dans la direction de l'avant vers l'arrière du corps de véhicule est supérieure ou égale à une dimension dans la direction de l'avant vers l'arrière du corps de véhicule d'une partie de liaison de la partie saillante (21a) et de la plaque verticale (37).

6. Motocyclette (1) selon l'une quelconque des revendications 2 à 5, dans laquelle la plaque verticale (37) comprend une partie étendue (37a) s'étendant vers l'arrière d'une partie de liaison de la partie saillante (21a) et de la plaque verticale (37).

7. Motocyclette (1) selon l'une quelconque des revendications précédentes, dans laquelle l'élément formant conduit d'air (15) comprend une unité intégrée au moins partiellement réalisée en une résine synthétique.

8. Motocyclette (1) selon l'une quelconque des revendications précédentes, dans laquelle la pluralité de conduits d'air de refroidissement (21 à 36) s'étendent vers l'arrière du véhicule de la région latérale vers la région centrale de l'élément formant conduit d'air (15).

9. Motocyclette (1) selon l'une quelconque des revendications précédentes, dans laquelle la pluralité de conduits d'air de refroidissement (21 à 36) sont positionnés graduellement davantage vers l'arrière du véhicule alors que les conduits d'air de refroidissement (21 à 36) s'étendent d'une région supérieure vers une région inférieure de l'élément formant conduit d'air (15).

10. Motocyclette (1) selon l'une quelconque des revendications précédentes, dans laquelle un bord inférieur d'un conduit d'air de refroidissement (22a) est positionné à une position inférieure à une position d'un bord supérieur d'un conduit d'air de refroidissement supérieur immédiatement adjacent (21a), et lesdits bords inférieur et supérieur des conduits d'air de refroidissement adjacents (22a, 21a) ont une distance de séparation entre eux dans la direction de l'avant vers l'arrière du véhicule.

11. Motocyclette (1) selon l'une quelconque des revendications précédentes, dans laquelle un bord supérieur d'un conduit d'air de refroidissement (22a) est situé davantage vers l'avant du véhicule que le bord inférieur d'un conduit d'air de refroidissement supérieur immédiatement adjacent (21a).

12. Motocyclette (1) selon l'une quelconque des revendications précédentes, dans laquelle les conduits d'air de refroidissement (21 à 36) sont formés de manière à présenter une symétrie par rapport à une droite le long de la région centrale de l'élément formant conduit d'air.

13. Motocyclette (1) selon l'une quelconque des revendications 1 à 12, dans laquelle le capot (2) recouvre un côté supérieur arrière d'une roue avant (3), l'évidement (13) s'ouvre vers un côté inférieur avant d'un corps de véhicule et fait face à une section supérieure de la roue avant (3) d'un côté arrière du corps de véhicule,
l'élément formant conduit d'air (15) est agencé de sorte qu'une périphérie de l'élément formant conduit d'air (15) est entourée par le capot (2), l'élément formant conduit d'air (15) étant agencé pour guider le vent de déplacement de l'intérieur de l'évidement (13) vers l'échangeur de chaleur (14), la pluralité de conduits d'air de refroidissement (21 à 36) étant alignés dans une direction du haut vers le bas, et lorsque les conduits d'air de refroidissement (21 à 36) sont vus à partir de l'avant du corps de véhicule, les conduits d'air de refroidissement (21 à 36) sont formés de manière à s'incliner avec une hauteur changeant graduellement alors que les conduits d'air de refroidissement (21 à 36) s'étendent d'une section d'extrémité au niveau d'une partie extérieure dans la direction de largeur du véhicule vers une partie centrale dans la direction de largeur du véhicule.
